**Europäisches Patentamt**

**European Patent Office**

**Office européen des brevets**

(19)

(11) Veröffentlichungsnummer: **0 336 392**
**A2**

(12) **EUROPÄISCHE PATENTANMELDUNG**

(21) Anmeldenummer: **89105962.8**

(22) Anmeldetag: **05.04.89**

(51) Int. Cl.⁴: **H02M 3/338**

(30) Priorität: **05.04.88 HU 164088**

(43) Veröffentlichungstag der Anmeldung:
**11.10.89 Patentblatt 89/41**

(84) Benannte Vertragsstaaten:
**AT BE CH DE ES FR GB GR IT LI LU NL SE**

(71) Anmelder: **HIRADASTECHNIKAI ANYAGOK GYARA**
**Zrinyi utca 39**
**H-2601 Vác(HU)**

(72) Erfinder: **Kocsis, Ferenc**
Erdös u. 13
**H-2601 Vác(HU)**
Erfinder: **Schulcz, Gábor**
**Széchenyi u. 28**
**H-2601 Vác(HU)**
Erfinder: **Deli, Jenö**
**Zemplén u. 11/a**
**H-8800 Nagykanizsa(HU)**

(74) Vertreter: **Patentanwälte Viering & Jentschura**
**Steinsdorfstrasse 6**
**D-8000 München 22(DE)**

(54) **Selbstschwingender Eintaktwandler sowie Verfahren zum Betreiben desselben.**

(57) Die Erfindung betrifft ein Verfahren zum Betreiben eines selbstschwingenden Eintaktwandlers, wobei ein mit einem Schaltelement (K) des Wandlers parallelgeschalteter Kondensator (C) über die Primärwicklung (L1) eines HF-Transformators (TR) aufgeladen, ein Steuersignal für das Schaltelement (K) mittels einer Steuer- oder Regeleinheit gegeben und dadurch das Schaltelement (K) geöffnet wird. Ferner wird das Schaltelement (K) in Abhängigkeit vom Wert bzw. Zeitablauf des Schaltelementstromes mittels eines von der Rückkopplungswicklung (Lᵥ) des Trafos (TR) abgenommenen Steuersignals gesperrt und dann bei einem vorgegebenen Wert des sinkenden Betriebstromes wieder geöffnet. Dieser Vorgang wird periodisch wiederholt. Erfindungsgemäß wird der Steuereingang des Schaltelementes (K) mittels niedriger Impedanz galvanisch abgeschlossen und in demjenigen Zeitbereich wieder eingeschaltet, dessen Anfang durch die Abnahme der am Schaltelement (K) gemessenen Spannung auf Null, und dessen Ende durch das Abklingen des über das Schaltelement (K) fließenden und eine zur Betriebspolarität des Schaltelementes (K) entgegengesetzte Polarität aufweisenden Stromes bestimmt werden. Ferner wird über das eingeschaltete Schaltelement (K) ein dem Betriebsstrom proportionaler oder fast konstanter Steuerstrom geleitet und dann wird das Schaltelement (K) von den momentanen Betriebsparametern des Wandlers unabhängig mit hoher Geschwindigkeit ausgeschaltet.

Ein selbstschwingender Eintaktwandler weist einen spannungserhöhenden HF-Transformator (TR) und ein mit dessen Primärwicklung (L1) in Reihe geschaltetes Schaltelement (K) auf, die beide über eine Stromfühlerstufe (S) an die Betriebsspannung ( + Uₜ) angeschlossen sind. Ferner weist der Eintaktwandler einen zwischen dem gemeinsamen Punkt der Primärwicklung (L1) des Schaltelementes (K) und der Betriebsspannung geschalteten Kondensator (C) und eine Reihenschaltung aus der Rückkopplungswicklung des Trafos, einem Kondensator und einem Widerstand, die an dem Steuereingang des Schaltelementes (K) angeschlossen ist, und einen an den Steuereingang des Schaltelementes (K) angeschlossenen und an die Betriebsspannung angelegten Startwiderstand auf. Erfindungsgemäß ist ein Hilfsschaltelement (SK) zwischen den Steuereingang des Schaltelementes (K) und das Massepotential geschaltet. Die Eingänge des Hilfsschaltelement (SK) sind mit der Stromfühlerstufe (S) und mit einer Differentialstufe (D) verbunden, wobei letztere an die Rückkopplungswicklung (Lᵥ) des Transformators

EP 0 336 392 A2

(TR) angeschlossen ist. Der Eintaktwandler wird gemäß dem eingangs beschriebenen Verfahren betrieben.

Fig 1

## Selbstschwingender Eintaktwandler sowie Verfahren zum Betreiben desselben

Die Erfindung betrifft ein Verfahren zum Betreiben eines selbstschwingenden Eintaktwandlers, wobei durch Anschließen des Wandlers an die Betriebsspannung ein mit einem Schaltelement des Wandlers parallelgeschalteter Kondensator über eine Primärwicklung eines Spannungsübersetzungstransformators des Wandlers geladen, ein Steuersignal für ein Schaltelement mittels einer Steuereinheit oder Regeleinheit gegeben und dadurch das Schaltelement geöffnet wird. Ferner wird das Schaltelement in Abhängigkeit von dem Wert bzw. Zeitablauf des das Schaltelement durchfließenden Stromes mittels eines von der Rückkopplungswicklung des Transformators abgenommenen Steuersignals gesperrt. Dann wird bei einem vorgegebenen Wert des über das Schaltelement fließenden, abnehmenden Betriebstromes das Schaltelement wieder geöffnet. Das Öffnen und Sperren des Schaltelementes wird periodisch wiederholt.

Die Erfindung betrifft ferner einen selbstschwingenden Eintaktwandler, der einen spannungsübersetzenden Transformator, bevorzugt einen Hochfrequenztransformator, ein an die Primärwicklung des Transformators angeschlossenes und mit der Primärwicklung in Reihe geschaltetes Schaltelement enthält, wobei das eine Ende der Primärwicklung des Transformators und eine Klemme des Schaltelements gegebenenfalls über eine Stromfühlerstufe an die Betriebsspannungsklemmen des Wandlers angeschlossen sind, und mit einem an eine gemeinsame Klemme der Primärwicklung des Transformators und des Schaltelementes angeschlossenen Kondensator, desssen andere Anschlußklemme mit der Klemme der Primärwicklung des Transformators oder des Schaltelementes gemeinsam ebenfalls an die Betriebsspannung angeschlossen ist, ferner mit einem aus der Rückkopplungswicklung des Transformators, einem Kondensator und einem Widerstand bestehenden Reihenglied, das an den Steuereingang des Schaltelementes angeschlossen ist, ferner mit einem an die Betriebsspannung angeschlossenen Startwiderstand, der ebenfalls an einen Steuereingang des Schaltelementes angeschlossen ist.

Die überwiegende Mehrheit der den Stand der Technik darstellenden herkömmlichen sebstschwingenden Eintaktwandler kann auf eine solche Grundschaltung zurückgeführt werden, bei welcher der die für die Last notwendige Spannung herstellende Transformator, in der Regel ein Hochfrequenztransformator mit Eisenkern, über seine Primärwicklung mit einem Schaltelement, grundsätzlich mit einem Hochleistungs-Schalttransistor, in Reihe geschaltet ist. Der Transistor ist mit einem Kondensator überbrückt, während seine Basis über eine Startwiderstand an die Betriebsspannung sowie an einem aus der Rückkopplungswicklung des Transformators, einem Kondensator und einem Widerstand aufgebauten Reihenglied angeschlossen ist. Nach dem Einschalten der Betriebsspannung wird der auch die Betriebsfrequenz des Wandlers bestimmende Kondensator über die Primärwicklung des Transformators auf den Betriebsspannungswert geladen. Der in die Basis des Schalttransistors über den Startwiderstand einfließende Steuerstrom beginnt den Basiskondensator zu laden und wenn die Spannung dieses Basiskondensators die Öffnungsspannung des Schalttransistors übertrifft, beginnt auch der Schalttransistor zu öffnen und vermindert die Spannung des an seinem Kollektor angeschlossenen Kondensators. Die an der Primärwicklung des Transformators auftretende Spannung wird in der gleichen Phasenlage auf die Sekundärwicklung bzw. auf die Last transformiert. Diese Spannung erzeugt über die Rückkopplungswicklung des Transformators, den damit in Reihe geschalteten Basiskondensator und den Widerstand einen zusätzlichen Basisstrom und bewirkt ein stärkeres Öffnen des Schalttransistors. Dieser selbstverstärkende Prozeß bewirkt, daß der Schalttransistor in Sättigung gerät und die volle Betriebsspannung auf die Primärwicklung des Transformators schaltet.

Der Kollektorstrom des Schalttransistors erhöht sich während der Belastung exponential, während der Basisstrom des Schalttransistors infolge der Ladung des Kondensators des LCR-Gliedes ebenfalls exponential abnimmt. Wenn der Basisstrom einen mittels des Verhältnisses des Kollektorstromes und des Crossignal-Stromverstärkungsfaktors berechenbaren Grenzwert untertrifft, gerät der Schalttransistor aus der Sättigung und seine Kollektorspannung beginnt mit einer durch den angeschlossenen Kondensator bestimmten Geschwindigkeit zu wachsen. An der Primärwicklung des Transformators nimmt die Spannung ab, dadurch nimmt auch die Spannung der Rückkopplungswicklung des Transformators ab, was eine weitere Abnahme des Basisstromes des Schalttransistors bewirkt. Am Ende des Prozesses wird der Schalttransistor gesperrt, über seine Basis fließt eine Strom in Sperrichtung über, die Kollektorspannung des Schalttransistors beschreibt eine verzerrte Halbwellenform, dann wird bei einem Drittel oder der Hälfte der Betriebsspannung wieder geöffnet und der beschriebene Prozeß wird periodisch wiederholt.

Die beschriebene Schaltung weist zahlreiche Mängel auf, die eine vorteilhafte Anwendung begrenzen. So z.B. hängt die Basis des Schalttransistors gleichstromseitig in der Luft, so verursacht der stark temperaturabhängige innere Strom I $_{CBO}$

mit dem Steuerbasisstrom addiert Regelungsprobleme. Dieser Strom kann infolge der Schaltverluste auch einen solchen Wert erreichen, daß das System nicht mehr geregelt werden kann und eine zu hohe Dissipation bei dem Schalttransistor auftritt.

Bei einer Versorgung von der Netzspannung hat die an den Wandler angelegte Spannung einen Wert von ungefähr 300 V. Die Kollektorspannung des Schalttransistors sollte jedoch auf eine Spannung von 800-1000V erhöht werden, um einen hohen Wirkungsgrad und guten Energieverbrauch zu erreichen.

Da die üblichen Transistortypen nur eine fest definierte Höchstspannung ohne Beschädigung aushalten, ist die Schaltung nicht zuverlässig, wenn der Basis-Emitter-Übergang des Transistors nicht mit einer niedrigen Impedanz abgeschlossen ist.

Um einen stabilen und zuverlässigen Betrieb zu erreichen, sollte der Schalttransistor geöffnet werden, bevor seine Kollektorspannung auf Null sinkt. Wenn der Schalttransistor auf gewöhnliche Art bei einem Eindrittel-Wert der Betriebsspannung wieder geöffnet wird, sollte dann die Energie des angeschlossenen Kondensators durch den Schalttransistor dissipiert werden. Das bedeutet laut praktischer Erfahrungen einen Verlust von ungefähr 1 w. Wenn der Schalttransistor in der Nähe der Kollektorspannung von 200 V wieder geöffnet wird - und das kommt wegen der Stabilität und der Regelbarkeit ziemlich oft vor - so erhöht sich der angegebene Verlust auf das Vierfache, was auch schon für den Halbleiter bedeutend hoch ist. Über den Verlust hinaus vermindert sich auch die Zuverlässigkeit der Schaltung ziemlich stark dadurch, daß der Transistor die in seiner Kristallstruktur örtliche Überlastungen verursachenden stoßartigen Beanspruchungen aushalten soll.

Im geöffneten, gesättigen Zustand des Schalttransistors nimmt der Basisstrom im Gegenteil zum sich erhöhenden Kollektorstrom ab, was ebenfalls die Verluste des Schalttransistors erhöht.

Beim Ausschalten des Schalttransistors kommt der sperrende Basisstrom langsam zustande, während die Kollektorspannung im gleichen Takt wächst. Dieser langsame Übergang bedeutet ebenfalls Verluste.

Ziel der Erfindung ist, den Betrieb der bekannten selbst schwingenden Eintaktwandler durch eine neuartige Steuerung und eine neuentwickelte Schaltungsanordnung zu verbessern. Die Erfindung beruht auf der Erkenntnis, daß der Basis- Emitter-Übergang des Schalttransistors entleert werden sollte, damit die Regelung von dem Strom $I_{CBO}$ des Schalttransistor unabhängig gemacht wird. Der Schalttransistor darf nur im spannungsfreien Zustand in Öffnen gesteuert werden, und der Basisstrom des Schalttransistors soll entsprechende Reserve aufweisen. Der Schalttransistors soll abrupt gesperrt werden, damit verlusterhöhende Transiente nicht auftreten können.

Die gestellt Aufgabe wurde mit einem solchen Steuerungsverfahren gelöst, bei dem mittels Anschließen des Wandlers an die Betriebsspannung ein mit einem Schaltelement des Wandlers parallelgeschalteter Kondensator über eine primäre Windung eines Spannungsübersetzungstransformators des Wandlers geladen, ein Steuersignal für ein Schaltelement mittels einer Steuereinheit oder Regeleinheit gegeben und dadurch das Schaltelement geöffnet wird, ferner das Schaltelement in Abhängigkeit von dem Wert bzw. Zeitablauf des das Schaltelement durchfließenden Stromes mittels eines von der Rückkopplungswicklung des Transformators abgenommen Steuersignals gesperrt wird, dann bei einem vorgegebenen Wert des über das Schaltelement fließenden, abnehmenden Betriebsstromes das Schaltelement wieder geöffnet und das Öffnen und das Sperren des Schaltelements periodisch wiederholt werden. Im Sinne der Erfindung wird der Steuereingang des Schaltelementes mittels niedriger Impedanz und galvanisch abgeschlossen, und das Schaltelement wird in jenem Zeitbereich wieder eingeschaltet, dessen Anfang durch die Abnahme der am Schaltelement gemessenen Spannung auf Null und dessen Ende durch das Abklingen des über das Schaltelement fließenden gesetzte Polarität aufweisenden Stromes bestimmt wird, ferner über das eingeschaltete Schaltelement ein dem durch das Schaltelement fließenden Betriebsstrom proportionaler oder ein fast konstanter Steuerstrom geleitet wird, dann das Schaltelement von den momentanen Betriebsparametern des Wandlers unabhängig mit hoher Geschwindigkeit ausgeschaltet wird.

Nach einer bevorzugten Durchführungsart des erfindungsgemäßen Verfahrens wird das schnelle Absperren mit niedriger Impedanz des als Schaltelement verwendeten Schalttransistors mit Hilfe eines Hilfsschaltelementes derart durchgeführt, daß durch das Öffnen des Hilfsschaltelementes die Basis-Emitter-Strecke des Schalttransistors entleert wird.

Es ist weiter vorteilhaft, wenn der Zeitpunkt des Einschaltens des Schaltelementes innerhalb im Bereich des vorgegebenen Zeitbereichs so bestimmt wird, daß die Differenzfunktion der am Schaltelement gemessenen Spannung beobachtet wird, und ein Steuersignal zum Einschalten des Schaltelementes bei plötzlichem Absinken der Differenzfunktion auf Null ausgegeben wird.

Die gestellte Aufgabe wird ferner mit einem solchen selbstschwingenden Eintaktwandler gelöst, der einen spannungsübersetzenden Transformator, bevorzugt einen Hochfrequenztransformator, ein an die Primärwicklung des Transformators angeschlossenes, mit der Primärwicklung in Reihe geschaltetes Schaltelement enthält, wobei das eine Ende der Primärwicklung des Transformators und eine Klemme des Schaltelemtenes gegebenenfalls über eine Stromfühlerstufe an die Betriebsspannungsklemmen des Wandlers angeschlossen werden, und mit einem an eine gemeinsame Klemme der Primärwicklung des Transformators und des Schaltelementes angeschlossenen Kondensator, dessen andere Aschlußklemme mit der Klemme der Primärwicklung des Transformators oder des Schaltelementes gemeinsam ebenfalls an die Betriebsspannung angeschlossen ist, ferner mit einem aus der Rückkopplungswicklung des Transformators, einem Kondensator und einem Widerstand bestehenden Reihenglied, das an den Steuereingang des Schaltelementes angeschlossen ist, ferner mit einem an die Betriebsspannung angeschlossenen Startwiderstand, der ebenfalls an einen Steuereingang des Schaltelementes angeschlossen ist.

Im Sinne der Weiterentwicklung ist ein Steuereingang eines Hilfsschaltelementes an einer gemeinsamen Klemme des Schaltelementes und der Stromfühlerstufe angeschlossen, und die Ausgangsanschlüsse des Hilfsschaltelementes sind an den Steuereingang des Schaltelementes angeschlossen, ferner ist an die Rückkopplungswicklung des Transformators ein Eingang einer Differentialstufe mit dem Kondensator des aus dem in Reihe geschalteten Rückkopplungswicklung-Kondensator-Widerstand bestehenden LCR-Gliedes gemeinsam angeschlossen, wobei der Ausgang der Differentialstufe mit einem weiteren Steuereingang des Hilfsschaltelementes verbunden ist.

Gemäß einer bevorzugten Ausführungsform der Erfindung wird als Schaltelement des Wandlers ein Schalttransistor eingesetzt, dessen Kollekttor mit einer Klemme der Primärwicklung des Transformators und mit einer Klemme eines parallen Kondensator-Diode-Gliedes verbunden ist, wobei die andere Klemme der Primärwicklung an die Betriebsspannung und die andere Klemme des parallelen Gliedes an Masse geschaltet sind, und der Ermitter des Schalttransistors über einen als Stromfühlerstufe eingesetzten Ermitterwiderstand an Masse, ferner über einen Vorschaltwiderstand an die Basis eines das Hilfsschaltelement bildenden npn Kleinsignaltransistors angeschlossen ist, wobei an die Basis des erwähnten Transistors ein Basiswiderstand, ein damit parallelgeschalteter Verzögerungskondensator und ferner eine Entkopplungsdiode der Differentialstufe angeschlossen sind, und die Basis des Schalttransistors über den Startwiderstand an die positive Betriebsspannung, an den Kollektor des als Hilfsschaltelement eingesetzten Transistors und an den Widerstand des Reihengliedes angeschlossen sind, während die Differentialstufe durch den mit der gemeinsamen Klemme der Rückkopplungsswicklung und des damit in Reihe geschalteteten Kondensators verbundenen Kondensator und durch ein an Masse geschaltetes paralleles Widerstand-Diode-Glied gebildet ist, das an dem gemeinsamen Punkt des Kondensators und der Entkopplungsdiode angeschlossen ist.

Gemäß einer weiteren bevorzugten Ausführungsform der Erfindung ist der Steuereingang des Wandlers über einen Signalpegelanpassungswiderstand an die Basis des als Hilfsschaltelement eingesetzten Transistors angeschlossen.

Gemäß einer weiteren bevorzugten Ausführungsform ist der Emitter des das Hilfsschaltelement bildenden Transistors an Masse gelegt.

Es ist ferner vorteilhaft, wenn der Emitter des das Schaltelement bildenden Transistors an ein Potential angeschlossen ist, das negativer als das Massenpotential ist.

Das erfindungsgemäße Verfahren, ferner die vorgeschlagene Schaltungsanordnung haben den Vorteil, daß ein einfach aufgebauter und zuverlässiger Wandler entsteht, der die bisher aus Stabilitätsgründen und Zuverlässigkeitsproblemen vermiedenen Anwendungen in der Praxis ermöglicht.

Die Erfindung wird nachstehend anhand der beigefügten Zeichnung näher erläutert. Es zeigen

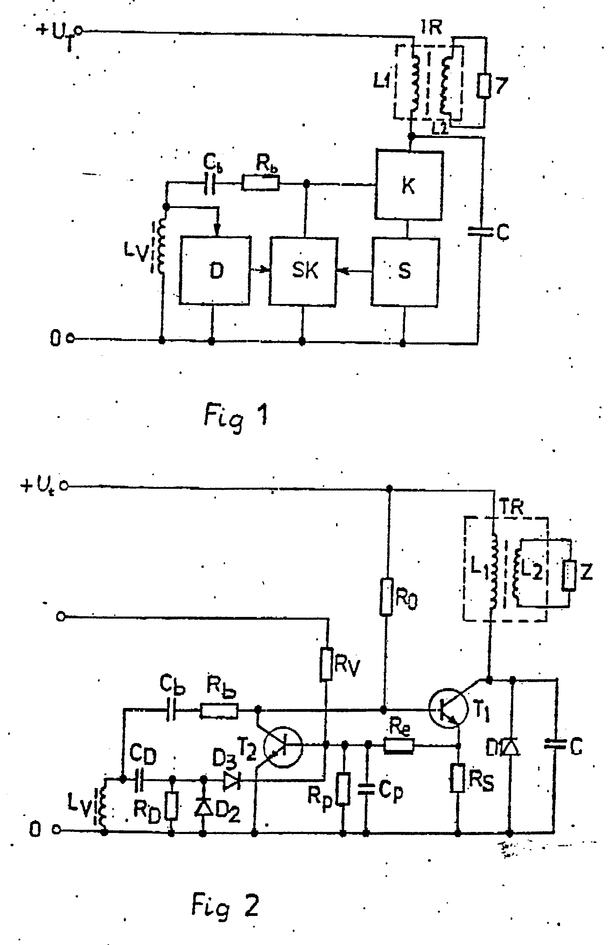

.Figur 1 ein Blockschaltbild einer möglichen Ausführungsform des erfindungsgemäßen Wandlers,

Figur 2 einen ausführlichen Schaltplan der Schaltungsanordnung laut Figur 1,

Figur 3 einige charakteristische Spannungs- und Stromkurven der Schaltung gemäß Fig. 2, und,

Figur 4 ein Schaltbild einer weiteren möglichen Ausführungsform der Erfindung.

Das aus Fig. 1 ersichtliche Blockschema ist an Klemmen eines in der Zeichnung nicht dargestellten bekannten Gleichstromnetzteiles angeschlossen. Eine Primärwicklung L1 eines spannungserhöhenden Hochfrequenztransformators TR ist an der positiven Betriebsspannung $+U_t$ und einer Klemme eines Schaltelementes K angeschlossen, während eine Sekundärwicklung L2 des Transformators RT an ein Lastglied 7 angeschlossen ist. Eine andere Klemme des Schaltelementes K ist über eine Stromfühlerstufe S an Massepotential gelegt. Das Schaltelement K und die Stromfühlerstufe S ist mit einem Kondensator C überbrückt. Der Ausgang der Stromfühlerstufe S ist mit einem Steuereingang eines Hilfsschaltelementes SK verbunden, dessen eine Klemme an Masse und dessen andere Klemme an den Steuereingang des Schaltelementes K angeschlossen ist. An den gleichen Punkt ist auch die eine Klemme eines LCR-Gliedes angeschlossen, dessen andere Klemme wiederum an Masse gelegt ist. Das LCR-Glied besteht aus einer in Reihe geschalteten Rückkopplungswicklung $L_v$ des Transformators TR, einem Kondensator $C_b$ und einem Widerstand $R_b$. Die Rückkopplungswicklung $L_v$ und der Kondensator $C_b$ haben eine gemeinsame Klemme, an welcher ein Eingang einer Differentialstufe D angeschlossen ist, wobei der Ausgang dieser Differentialstufe D mit dem zweiten Steuereingang des Hilfsschaltelementes SLK verbunden ist.

Diese Prinzipschaltung ist in Fig. 2 ausführlicher dargestellt, wobei der mögliche Aufbau der einzelnen Blöcke gezeigt ist. Das Schaltelement K ist mit einem Schalttransistor T1 ausgeführt und die Stromfühlerstufe S ist durch einen Widerstand $R_s$ gebildet. Eine Diode D1 mit zum Schalttransistor T1 entgegengesetzter Polarität ist zu dem Kodensator C parallelgeschaltet. Das Hilfsschaltelement SK enthält einen weiteren Transistor T", dessen Emitter an Masse und dessen Kollektor an die Basis des Schalttransistors T1 und die Basis an die gemeinsame Klemme eines an Masse gelegten Parallelgliedes und eines Vorschaltwiderstandes $R_e$ angeschlossen ist. Das Parallelglied besteht aus einem Widerstand $R_p$ und einem Kondensator $C_p$. Die andere Klemme des Vorschaltwiderstandes $R_e$ ist mit dem Emitter des Schalttransistors T1 verbunden. Die Differentialstufe D enthält einen Kondensator $C_d$, der mit seiner einen Klemme an die Rückkopplungswicklung $L_v$ und seiner anderen Klemme an einen Widerstand $R_d$, an eine Diode D2 und über eine weitere Diode D3 an die Basis des Transistors T2 angeschlossen ist. Der Widerstand $R_d$ und die Diode D2 sind parallel an Masse angeschlossen. Ebenfalls an die Basis des Transistors T2 ist über einen weiteren Steuerwiderstand $R_v$ der Steuereingang des Wandlers angeschlossen. Die Basis des Schalttransistors T1 ist über einen Startwiderstand $R_0$ an die positive Betriebsspannung $+ U_t$ angeschlossen.

In der in Fig. 2 dargestellten Schaltung erfüllt das Hilfsschaltelement SK auch die Aufgabe eines Stromkomparators. Die Derivierte der Spannung des Schalttransistors T1 weist einen leich feststellbaren Sprung auf, wenn die Kollektorspannung des Schalttransistors T1 auf Null sinkt. Da diese Spannung einen hohen Wert aufweist, ist es vorteilhaft, die Spannung der sich in gleicher Weise verhaltenden Rückkopplungswicklung $L_v$ zu beobachten. Die Derivation dieser Spannung wird mittels dem Kondensator $C_D$ und dem Widerstand $R_D$ ausgeführt, während die Dioden D2, D3 das Entleeren des Kondensators $C_D$ sowie das Trennen des Spannungs- und Stromwerte sichern. Angenommen, daß der Schalttransistor T1 in geöffnetem Zustand ist, erhöht sich sein Kollektorstrom wegen der Primärwicklung L1 des Transformators TR nahezu linear. Dieser Strom erzeugt an dem Widerstand $R_s$ einen proportionalen Spannungsabfall, der über den Widerstand $R_e$ den Kondensator $C_p$ lädt. Der als Hilfsschaltelement dienende Transistor T2 bekommt eine Basisspannung, die wegen des Kondensators $C_p$ nur verzögert wächst, und dort Transistor T2 sperrt dementsprechend auch den Basis-Emitter-Übergang des Schalttransistors T1 verzögert. Der Kollektorstrom des Schalttransistors R1 wird damit auf den Transistor T2 übergeführt. Die Verzögerungszeit des Schalttransistors T1 sowie die wegen des Kondensators $C_p$ zustandegekommene Phasenverspätung bewirken, daß die Spannung an dem Widerstand $R_e$ weiterhin zunimmt, der Transistor T2 in Sättigung gerät und damit den Kollektorstrom des Schalttransistors T1 völlig übernimmt und dessen Basis-Emitter-Übergang entleert. Dementsprechend kann der Schalttransistor T1 plötzlich und mit hoher Geschwindigkeit absperren. Der Strom des Transformators TT wird auf den Kondensator C übergeführt, der die Kollektorspannung des Schalttransistors T1 langsam zunehmen läßt. Das Wesen des beschriebenen Prozesses liegt also darin, daß der schnelle Kleinleistungstransistor T2 den Strom von dem langsamen Hochleistungs-Schalttransistor T1 übernimmt, damit letzterer genügend Zeit zum totalen Absperren hat. All das spielt sich mit einer sehr niedrigen, praktisch vernachlässigbaren Dissipation ab. Der Transistor T2 soll mindestens so lange geöffnet gehalten werden - das wird durch den Kondensator $C_p$ sichergestellt - bis die Kollektorspannung des Schalttransistors T1 den Wert der Betriebsspannung kreuzt. Dann wechseln die Spannungen der Primärwicklung L1 und damit der Rückkopplungswicklung Lv des Transformators RT ihre Polarität, und über den Kondensator $C_b$ und den Widerstand $R_b$ fließt ein Sperrstrom in die Basis des Schalttransistors T1 hinein. Dies soll deshalb gewährleistet werden, da bei dem Steigen der Kollektorspannung des Schalttransistors T1 ein Basisstrom in Öffnungsrichtung über die Kollektor-Basis-Kapazität des Schalttransistors T1 ensteht und wenn dieser Öffnungsstrom nicht über die Basis ausfließen kann, dann würde sie dazu dienen, den Schalttransistor T1 vorzeitig zu öffnen, was eine Verlusterhöhung ergibt.

Da der Schalttransistor T1 und der Transistor T2 in geschlossenem Zustand sind, schwingt der aus der Primärwicklung L1 des Transformators und dem Kondensator C bestehende Schwingkreis unbelastet, bzw. führt ferne Energie dem Lastglied Z zu. Wenn die Kollektorspannung des Schalttransistors T1 den Spitzenwert erreicht, wechselt das Derivierte der Spannung ein Vorzeichen. Dies erkennt man an der Rückkopplungswicklung L als eine stets wachsende positive Spannung, die nach Derivierung über die Diode 3 den Transistor T2 öffnet, wobei der Transistor T2 den Schalttransistor T1 in gesperrtem Zustand hält. Wenn die Kollektorspannung des Schalttransistors T1 den Betriebsspannungswert kreuzt, wechselt die Polarität der Spannung der Rückkopplungswicklung $L_v$ wiederum. Die Derivierte der Spannung bleibt aber unverändert. Die Spannung der Rückkopplungswicklung $L_v$ könnte schon den Schalttransistor öffnen, der Strom fließt aber in den geöffneten Transistor T2 und der Schalttransistor T1 bleibt weiterhin gesperrt. Dieser Zustand besteht so lange, bis die Kollektorspannung des Schalttransistors T1 einen negativen Wert annimmt. Dann öffnet die mit dem Kondensator C parallelgeschaltete Diode D1 und übernimmt die Stromleitung von dem Kondensator C und erhält auch dessen Spannung.

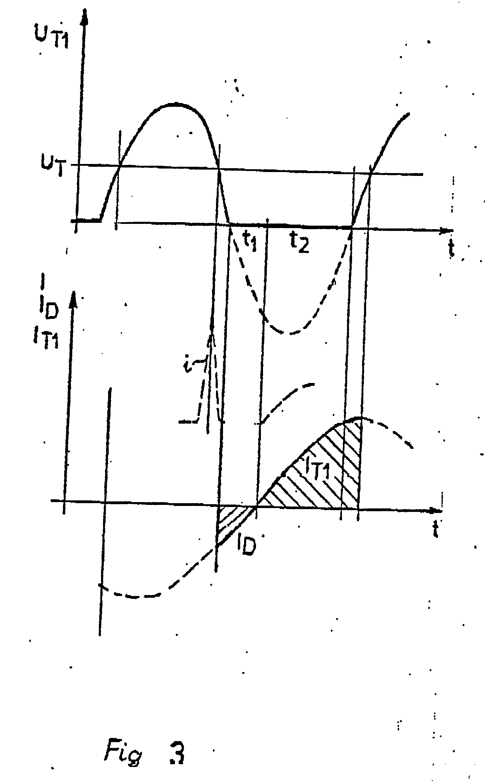

Da die Spannung nicht weiter sinken kann, springt ihre Derivierte auf Null, so sperrt der als Hilfsschaltelement dienende Transistor D2 mit kurzver Verzögerung und sein Kollektorstrom wird in die Basis des Schalttransistors T1 übergeleitet. Der Schalttransistor T1 beginnt zu leiten, wenn die Energie aus der Primärwicklung L1 des Transformators RT dermaßen versiegt, daß die Kollektorspannung des Schalttransistors T1 einen positiven Wert anzunehmen beginnt. Dann kehrt die Stromrichtung der Primärwicklung L1 des Transformators um, und der Schalttransistor T1 übernimmt die Leitung von der Diode D1 und bleibt so lange in leitendem Zustand, bis sein Kollektorstrom den Ausschaltwert erreicht, wenn der Schalttransistor T1 durch den Transistor T2 in der vorher beschriebenen Weise ausgeschaltet wird. Von diesem Punkt an wiederholt sich der beschriebene Prozeß. Wenn eine die Grenzenergie übertreffende Energiemenge aus dem Schwingkreis entnommen wird, kann die Kollektorspannung des Schalttransistors T1 nicht auf Null sinken und der Betrieb der Schaltungsanordnung gleicht dem Berieb der bekannten Schaltungsanordnungen. In solchen Fällen wird eine zusätzliche Regelung benötigt, die über den Widerstand $R_v$ von dem Steuereingang des Wandlers an die Basis des Transistors T2 geleitet wird. Auch fühlt der Transistors T2 es so, als wäre der Kollektorstrom des Schalttransistors T1 erhöht oder zurückgenommen. Zu einem positiven Steuerstrom gehört ein niedriger Kollektorstrom des Schalttransistors T1 und zu einem negativen Steuerstrom gehört ein höherer Kollektorstrom des Schalttransistors T1. Der Schaltkreis kann derart mittels Totzeitannäherung geregelt werden. Die charakteristischen Spannungs- und Stromkurven sind in der Figur 3 dargestellt. Es bedeuten $U_t$ die Betriebsspannung, $U_{T1}$ die Kollektorspannung des Schalttransistors T1, I den Strom der Primärwicklung L1. $I_d$ den Strom der Diode D1 und $I_{T1}$ den Strom des Schalttransistors T1. In der Figur ist gestrichelt auch der Kollektorstrom i des Schalttransistor T1 gezeigt, der in herkömmlichen Schaltungen und Steuerungen fließt, wobei auch die wegen des Kondensators C auftretenden Spitzen sichtbar sind.

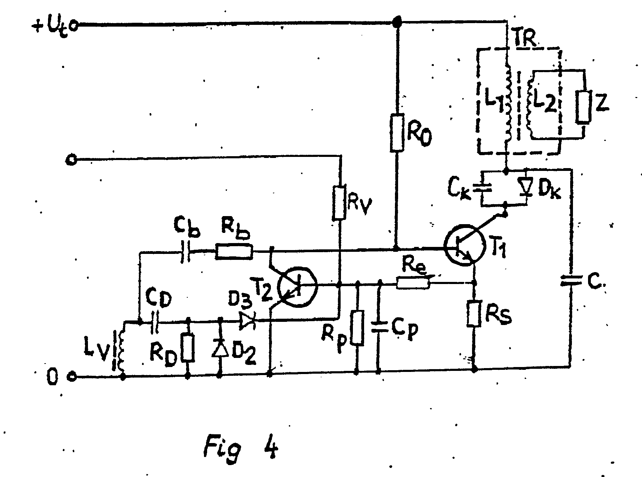

In Fig. 4 ist eine Variante der Schaltungsanordnung aus Fig. 2 dargestellt, bei welcher statt der dem Kondensator C parallelgeschalteten Diode D1 ein aus der Diode $D_k$ und dem Kondensator $C_k$ bestehendes Parallelgleid zwischen den Kollektor des Schalttransistors T1 und der Primärwicklung L1 des Transformators TR eingefügt ist. Der Aufbau und die Arbeitsweise der Schaltung stimmt - davon abgesehen - mit der aus Figur 2 überein.

Diese Ausführungsvariante weist den Vorteil auf, daß die zum zuverlässigen Berieb nötige Sicherheitszeit so geschaffen wird, daß keine relativ hohe Blindleistung in den Schwingkreis eingespeist bzw. über die Diode D1 der Figur 2 in das Speisenetz zurückgeführt werden soll. Die in Reihe geschaltete Diode $D_k$ verhindert das Öffnen des Basis-Kollektor-Überganges des Schalttransistors T1 und damit die Rückströmung der Energie in das den Wandler speisende Netz. Die Spannung des Kondensators C kann in diesem Fal umgepolt werden, und die Energie bleibt in dem Schwingkreis. Zyklisch soll also nur der Verlust des Schwingkreises in die Schaltung eingespeist werden, welche Leistung weit niedriger ist, als die notwendige Blindleistung der Schaltung der Figur 2.

Während der so geschaffenen Sicherheitszeit strömt die eingespeicherte Energie weiterhin zum Ausgang und der Wirkungsgrad der Schaltung erhöht sich wesentlich. Der maximale Kollektorstrom i des Schalttransistors II nimmt dementsprechend ab, damit wird auch die Beanspruchung des Halbleiters wesentlich kleiner. Der mit der Diode $D_k$ parallelgeschaltete Kondensator $C_k$ dient zum Abdrücken der Kollektorspannung des Schalttransistors T1, deren Derivierte in diesem Fall nicht sprunghaft, sondern sinusförmig auf Null absinkt. Wenn der Wert der Derivierten bei einem Siliziumtransistor den Wert von 0,6 Vv unterschreitet, könnte der Schalttransistor T1 einschalten, doch seine Kollektorspannung ist negativ. So wird der Schalttransistor T1 nicht leitend und es kann keine gefährliche Stromspitze entstehen.

Der dargestellte Wandler und seine Steuerung gewährleisten trotz der Einfachheit die Lösung der gestellten Aufgaben. Der - selbstverständlich kurzschlußfeste - Wandler verringert die Umschaltverlustleistung des Schalttransistors T1 nahezu auf Null, dadurch werden die Betriebssicherheit und der Wirkungsgrad erhöht und der entstehende elektromagnetische Störpegel vermindert. Über die Betriebsspannungsleitungen des Wandlers fließen nahezu sinusförmigen Ströme, damit können bekannte einfache Entstörmaßnahmen verwendet werden.

## Ansprüche

1. Verfahren zum Betreiben eines selbstschwingenden Eintaktwandlers, wobei durch das Anschließen des Wandlers an die Betriebsspannung ein mit einem Schaltelement (K) des Wandlers parallelgeschalteter Kondensator (C) über eine Primärwicklung (L1) eines Spannungübersetzungstransformators des Wandlers geladen, ein Steuersignal für ein Schaltelement (K) mittels einer Steuereinheit oder Regeleinheit gegeben, und dadurch das Schaltelement (K) geöffnet wird, und wobei ferner das Schaltelement (K) in Abhhängigkeit von dem Wert bzw. Zeitablauf des das Schaltelement (K) durchfließenden Stromes mittels eines von der Rückkopplungswicklung des Transformators abgenommenen Steuersignals gesperrt wird, und dann bei einem vorgegebenen Wert des über das Schaltelement (K) fließenden, abnehmenden Betriebsstromes das Schaltelementes (K) wieder geöffnet wird, und wobei das Öffnen und das Sperren des Schaltelementes (K) periodisch wiederholt werden, dadurch gekennzeichnet, daß der Steuereingang des Schaltelementes (K) mittels niedriger Impedanz und galvanisch abgeschlossen wird und das Schaltelement (K) in demjenigen Zeitbereich wieder eingeschaltet wird, dessen Anfang durch die Abnahme der am Schaltelement (K) gemessenen Spannung auf Null und dessen Ende durch das Abklingen des über das Schaltelement (K) fließenden und eine zur Betriebspolarität des Schaltelementes (K) entgegengesetzte Polarität aufweisenden Stromes bestimmt wird, daß ferner über das eingeschaltete Schaltelement (K) ein dem durch das Schaltelement (K) fließenden Betriebsstrom proportionaler oder ein fast konstanter Steuerstrom geleitet wird, und daß dann das Schaltelement (K) von den momentanen Betriebsparametern des Wandlers unabhängig mit hoher Geschwindigkeit ausgeschaltet wird.

2. Verfahren nach Anspruch 1, dadurch gekennzeichnet, daß das schnelle Absperren des als Schaltelement (K) verwendeten Schalttransistors (T1) mit niedriger Impedanz mit Hilfe eines Hilfsschaltelementes (SK) derart durchgeführt wird, daß durch das Öffnen des Hilfsschaltelementes (SK) die Basis-Emitter-Strecke des Schalttransistors (T1) entleert wird.

3. Verfahren nach Anspruch 1, dadurch gekennzeichnet, daß der Zeitpunkt des Einschaltens des Schaltelementes (K) innerhalb desm vorgegebenen Zeitbereich so bestimmt wird, daß die Differenzfunktion der am Schaltelement (K) gemessenen Spannung beobachtet und ein Stromsignal zum Einschalten des Schaltelementes (K) bei plötzlichem Absinken der Differenzfunktion auf Null ausgegeben wird.

4. Selbstschwingender Eintaktwandler mit einem spannungsübersetzenden Transformator, bevorzugt einem Hochfrequenztransformator mit Eisenkern, mit einem an die Primärwicklung (L1) des Transformators angeschlossenen und mit der Primärwicklung (L1) in Reihe geschalteten Schaltelement (K), wobei das eine Ende der Primärwicklung (L1) des Transformators und eine Klemme des Schaltelementes (K) gegebenenfalls über eine Stromfühlerstufe an die Betriebsspannungsklemmen des Wandlers angeschlossen ist, ferner mit einem an eine gemeinsame Klemme der Primärwicklung (L1) des Transformators und des Schaltelementes (K) angeschlossenen Kondensator (C) , dessen andere Aschlußklemme mit der Klemme der Primärwicklung (L1) des Transformators oder des Schaltelementes (K) gemeinsam ebenfalls an die Betriebsspannung angeschlossen ist, ferner mit einem aus der Rückkopplungswicklung des Transformators, einem Kondensator und einem Widerstand bestehenden Reihenglied, das an den Steuereingang des Schaltelementes (K) angeschlossen ist, ferner mit einem an die Betriebsspannung angeschlossenen Startwiderstand, der ebenfalls an einen Steuereingang des Schaltelementes (K) angeschlossen ist, dadurch gekennzeichnet, daß ein Steuereingang eines Hilfsschaltelementes (SK) an einer gemeinsamen Klemme des Schaltelementes (K) und der Stromfühlerstufe (S) angeschlossen ist, und die Ausgangsanschlüsse des Hilfsschaltelementes (SK) an den Steuereingang des Schaltelementes (K) angeschlossen sind, ferner an die Rückkopplungswicklung ($L_v$) des Transformators (TR) ein Eingang einer Differentialstufe (D) mit dem Kondensator ($C_b$) des aus dem in Reihe geschalteten Rückkopplungswicklung ($L_v$) - Kondensator ($C_b$) - Widerstand ($R_b$) bestehenden LCR-Gliedes gemeinsam angeschlossen ist, wobei der Ausgang der Differentialstufe mit einem weiteren Steuereingang des Hilfsschaltelementes (SK) verbunden ist.

5. Wandler nach Anspruch 4, dadurch gekennzeichnet, daß als Schaltelement (K) des Wandlers ein Schalttransistor (t1) eingesetzt ist, dessen Kollektor mit einer Klemme der Primärwicklung (L1) des Transformators (TR) und mit einer Klemme eines parallelen Kondensator (C) - Diode (D1) - Gliedes verbunden ist, wobei die andere Klemme der Primärwicklung (L1) des Transformators (TR) an die Betriebsspannung ($+U_t$) und die andere Klemme des parallelen Gliedes an Massenpotential geschaltet ist, und der Ermitter des Schalttransistors (t1) über einen als Stromfühlerstufe (S) eingesetzten Emitterwiderstand ($R_s$) an Masse, ferner über einen Vorschaltwiderstand ($R_e$) an die Basis eines das Hilfsschaltelement (SK) bildenden Kleinsignaltransistors (T2) angeschlossen ist, wobei an die Basis dieses Transistors (T2) ein Basiswiderstand ($R_p$), ein damit parallelgeschalteter Verzöge-

rungskondensator ($C_p$) ferner eine Entkopplungs-diode (D3) der Differentialstufe (D) angeschlossen ist und die Basis des Schalttransistors (T1) über den Startwiderstand ($R_n$) an die positive Betriebs-spannung ($+U_t$), an den Kollektor des als Hilfsschaltelement (SK) eingesetzten Transistors (T2) und an den Widerstand ($R_b$) des Reihengliedes angeschlossen ist, während die Differentialstufe (D) durch den mit der gemeinsamen Klemme der Rückkopplungswicklung ($L_v$) und des damit in Reihe geschalteten Kondensators ($C_b$) verbundenen Kondensator ($C_d$) und durch ein an Masse geschaltetes parallelen Widerstand ($R_d$) - Diode (D2) - Glied gebildet ist, das an den gemeinsamen Punkt des Kondensators ($C_d$) und der Entkopplungsdiode (D3) angeschlossen ist.

6. Eintaktwandler nach Anspruch 5, dadurch gekennzeichnet, daß der Steuereingang des Wand-lers über einen Signalpegelanpassungswiderstand ($R_v$) an die Basis des als Hilfsschaltelement (SK) eingesetzten Transistors (T2) angeschlossen ist.

7. Eintaktwandler nach Anspruch 5 oder 6, dadurch gekennzeichnet, daß der Emitter des das Hilfsschaltelement (SK) bildenden Transistors (T2) an Masse geleitet ist.

8. Eintaktwandler nach Anspruch 5 oder 6, dadurch gekennzeichnet, daß der Emitter des Transistors (T2) an ein Potential angeschlossen ist, das negativer als das Massepotential ist.

Fig 1

Fig 2

Fig 3

Fig 4